# EUROPEAN PATENT APPLICATION

(11) **EP 4 637 000 A1**
(43) Date of publication of application: **22.10.2025**
(21) Application number: 22968554.0
(22) Date of filing: 16.12.2022
(51) Int. Cl.: H02K 11/20

(54) **MOTOR PROTECTOR, HOLDER FOR MOTOR PROTECTOR, METHOD FOR ATTACHING MOTOR PROTECTOR, AND ELECTRIC COMPRESSOR**

(71) Applicant: Ubukata Industries Co., Ltd., Aichi 457-0828 (JP)
(72) Inventor: YAMAGUCHI, Yoshio, Nagoya-shi, Aichi 457-0828 (JP); ADAKE, Takashi, Nagoya-shi, Aichi 457-0828 (JP)
(74) Representative: AOMB Polska Sp. z.o.o.
(86) International application number: PCT/JP2022/046446
(87) International publication number: WO 2024/127644

(57) **Abstract**

A motor protector (20) includes: an airtight container (30) made of metal; two conductive terminal pins (40); two fixed contacts (21); two movable contacts (22); a heat-sensitive movable plate (25) that is provided inside the airtight container and to which the two movable contacts are attached, the heat-sensitive movable plate (25) causing the movable contacts in contact with the respective fixed contacts to close the two fixed contacts under normal conditions when the heat-sensitive movable plate is not in operation, and deforming in a direction that separates the movable contacts from the respective fixed contacts to open the respective fixed contacts when an ambient temperature inside the airtight container reaches a predetermined temperature and the heat-sensitive movable plate operates; and a heat generating member (50) that is provided outside the airtight container and in contact with the conductive terminal pins, is made of a material different from that of the conductive terminal pins, is located between the conductive terminal pin and a winding of a motor, and generates heat when a current flows.

## Description

### Technical Field

Embodiments of the present invention relate to a motor protector, a holder for the motor protector, a method for attaching the motor protector, and an electric compressor.

### Background Art

Conventionally, for example, a motor protector for protection against burnout in the event of an abnormality is attached to an electric compressor equipped with a motor that operates at a constant speed. The motor protector is equipped with a heat-sensitive movable plate that operates with heat resulting from the ambient temperature inside the compressor or heat generated by the current flowing through the motor protector, and this operation of the heat-sensitive movable plate opens a circuit to interrupt energization to all windings of the motor.

In contrast, for example, in an inverter-driven electric compressor, a control unit of an inverter detects phase loss and abnormal current, and thus protection means other than the control unit are not essential. However, without the protection means other than the control unit, abnormal current to the electric compressor cannot be prevented if the control unit does not operate normally due to a control unit failure, misconnection, or the like. Therefore, even in the inverter-driven electric compressor, there is an increasing need for protection means other than the control unit to reliably protect the electric compressor from abnormal current. To address such a need, an external motor protector that does not involve modification of the electric compressor is considered. The external motor protector does not respond well to a change in a temperature inside a compressor container, such as a winding temperature. Therefore, an internal protector installed inside the compressor container is preferable to perform reliable overheat protection.

In the conventional internal protector, an increase in internal temperature due to Joule heat generated in the motor causes the heat-sensitive movable plate inside the motor protector to operate and open the circuit, which interrupts the power supply to the motor, thereby protecting the motor. However, for example, in an inverter-controlled motor, there is a high-voltage and high-current operation mode compared to a motor operating at a constant speed, whereas the winding current at the time of motor lock, the so-called lock current, is equal to or lower than the maximum rated current. When the difference between the maximum rated current and the lock current is small, the difference in Joule heat generated by the motor is also small, making it difficult to distinguish whether the operation is normal at or below the maximum rated current or whether an abnormality such as motor lock has occurred.

Therefore, it is necessary for the motor protector applied to the inverter-driven electric compressor not to operate at or below the maximum rated current even when the difference between the maximum rated current and the lock current is small, and, on the other hand, to operate reliably in a short period of time when an abnormality occurs due to excessive current or lock current.

### Citation List

### Patent Literature

Patent Literature 1: Japanese Patent Laid-Open No. 6-096649

### Summary of Invention

### Technical Problem

The present embodiment has been made in view of the above-described circumstances, and an object thereof is to provide a motor protector, a holder for the motor protector, a method for attaching the motor protector, and an electric compressor, capable of suppressing the occurrence of excessive operation, in which operation is performed at or below the maximum rated current, and non-operation, in which no operation is performed even when there is an abnormality due to excessive current or lock current.

### Solution to Problem

A motor protector according to an embodiment includes: an airtight container that is made of metal and formed to be airtight, and includes a housing having an opening and a space inside, and a lid plate provided on the housing and covering the opening; two conductive terminal pins each provided in the lid plate via a filler having electrical insulation, the conductive terminal pins each having one end inserted into the airtight container and the other end exposed to an outside of the airtight container; two fixed contacts provided inside the airtight container and electrically connected to the conductive terminal pins; two movable contacts provided inside the airtight container and corresponding to the two fixed contacts, respectively; a heat-sensitive movable plate that is provided inside the airtight container and to which the two movable contacts are attached, the heat-sensitive movable plate causing the movable contacts in contact with the respective fixed contacts to close the two fixed contacts under a normal condition when the heat-sensitive movable plate is not in operation, and deforming in a direction that separates the respective movable contacts from the respective fixed contacts to open the respective fixed contacts when an ambient temperature inside the airtight container reaches a predetermined temperature and the heat-sensitive movable plate operates; and a heat generating member that is connected and fixed to the conductive terminal pins outside the airtight container, is made of a material different from the conductive terminal pins, is located between each of the conductive terminal pins and a winding of a motor, and generates heat when a current flows.

A holder for a motor protector according to the embodiment is a holder for attaching the motor protector to an electric compressor, and the holder includes: a cover portion into which at least a part of the motor protector is fitted and that surrounds the heat generating member; and a blade portion formed in a plate shape extending in a direction perpendicular to a longitudinal direction of the conductive terminal pins.

A method for attaching a motor protector according to the embodiment is a method for attaching the motor protector to an electric compressor, and the method includes a step of attaching the motor protector to the winding of the motor in an orientation such that the heat generating member is exposed to a flow of refrigerant generated during normal operation of the electric compressor in a compressor container of the electric compressor.

### Brief Description of Drawings

[Figure 1] Figure 1 is a perspective view showing an example of a motor protector and a holder according to one embodiment, and showing a state in which the motor protector is fitted into the holder (Part 1).
[Figure 2] Figure 2 is a perspective view showing an example of the motor protector and the holder according to one embodiment, and showing a state in which the motor protector is fitted into the holder (Part 2).
[Figure 3] Figure 3 is a perspective view showing an example of the motor protector and the holder according to one embodiment, and showing a state in which the motor protector is fitted into the holder (Part 3).
[Figure 4] Figure 4 is a perspective view showing an example of the motor protector and the holder according to one embodiment, and showing a state in which the motor protector is removed from the holder.
[Figure 5] Figure 5 is a cross-sectional view showing an example of the motor protector and the holder according to one embodiment, and showing a state in which the motor protector is fitted into the holder.
[Figure 6] Figure 6 is a cross-sectional view taken along line X6-X6 in Figure 5, showing an example of the motor protector and the holder according to one embodiment.
[Figure 7] Figure 7 is a view schematically showing an example of a connection mode when the motor protector according to one embodiment is applied to a three-phase motor.
[Figure 8] Figure 8 is a view schematically showing an example of an electric compressor equipped with the motor protector and the holder according to one embodiment.
[Figure 9] Figure 9 is an enlarged view of a portion along line X9-X9 in Figure 8, schematically showing an example of the electric compressor equipped with the motor protector and the holder according to one embodiment,
[Figure 10] Figure 10 is a diagram showing experimental results of the motor protector according to one embodiment, when the ratio of an electrical resistance value between two heat generating members to an electrical resistance value between two conductive terminal pins excluding the heat generating members is changed stepwise.

### Description of Embodiment

Hereinafter, a motor protector holder 10 and a motor protector 20 according to one embodiment will be described with reference to the drawings. In the following description, the motor protector holder 10 may be simply referred to as the holder 10.

The motor protector 20 is, for example, a motor protector suitable for a motor incorporated in a hermetic electric compressor used for an air conditioner or the like, especially a three-phase motor. The motor protector 20 is used, for example, by being connected to a neutral point of a three-phase motor. The motor protector holder 10 is a holder for holding the motor protector 20 and attaching the motor protector 20 to the electric compressor.

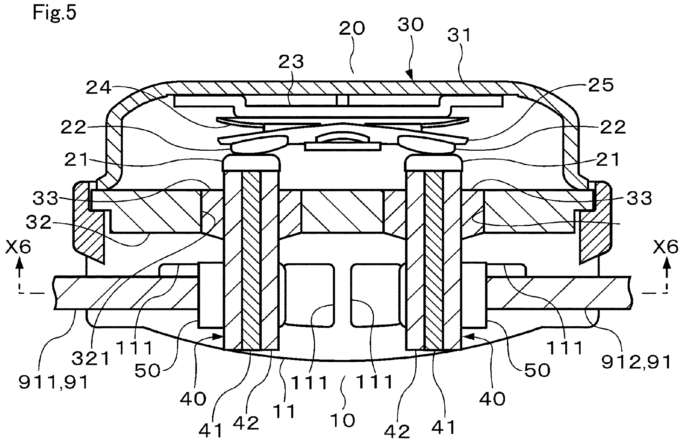

First, the motor protector 20 will be described below. The motor protector 20 operates to open a circuit when a predetermined abnormal current flows through the motor protector 20 and generates heat, or when the motor itself generates heat due to some abnormality, and as a result, the surrounding ambient temperature rises to a predetermined temperature. Thus, when operating, the motor protector 20 disconnects the neutral point of the three-phase motor to interrupt power supply to all windings of the motor. As shown in Figure 5 and other figures, the motor protector 20 includes an airtight container 30, two conductive terminal pins 40, two fixed contacts 21, two movable contacts 22, a support 23, an elastic plate 24, and a heat-sensitive movable plate 25. The fixed contacts 21, the movable contacts 22, the support 23, the elastic plate 24, and the heat-sensitive movable plate 25 are all provided in the airtight container 30.

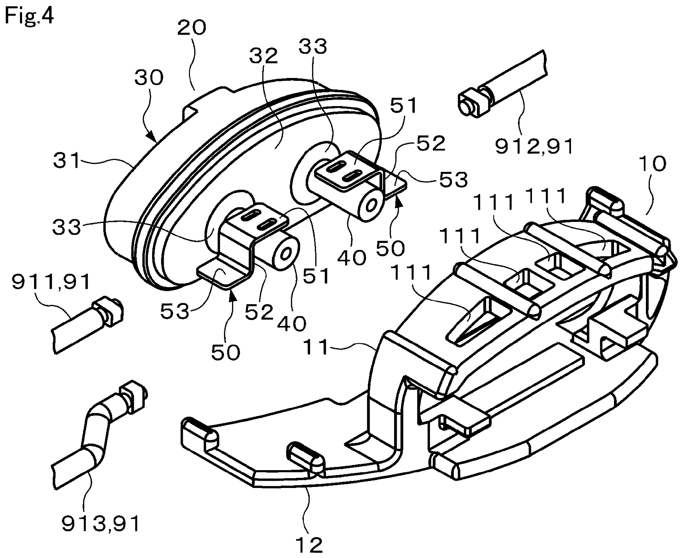

The airtight container 30 forms the outer shell of the motor protector 20 and is configured to be airtight and watertight. The airtight container 30 includes a housing 31 and a lid plate 32, as shown in Figures 4 and **5****.** The housing 31 is made of metal, for example, has a long shape with one end open, and is formed in a dome shape having a space inside. The lid plate 32 is provided at a position covering the opening of the housing 31. The lid plate 32 is a plate-shaped member made of metal, for example, and is formed in a shape along the opening portion of the housing 31. The entire circumference of the lid plate 32 is fixed to the opening-side end of the housing 31 by welding or the like, thereby sealing the opening of the housing 31 in an airtight and watertight manner.

The conductive terminal pin 40 is made of a conductive member such as metal and is formed in the shape of a cylindrical rod, for example. Each of the two conductive terminal pins 40 is caused to pass through a hole 321 formed in the lid plate 32, and is attached to the lid plate 32 with one end inserted into the airtight container 30 and the other end exposed to the outside of the airtight container 30. An electrically insulating filler 33, such as glass, is provided between the inside of the hole 321 and the conductive terminal pin 40. The filler 33 can also be referred to as an insulating member. Thus, the conductive terminal pin 40 is fixed to the lid plate 32 in a state that is electrically insulated from the lid plate 32 and is also airtight and watertight.

The conductive terminal pin 40 may have a structure having a plurality of layers with different properties. In the case of the present embodiment, the conductive terminal pin 40 has a two-layer structure. As shown in Figure 5, for example, the conductive terminal pin 40 may include a core material 41 and an outer material 42. The core material 41 constitutes the center of the conductive terminal pin 40. The outer material 42 is provided outside the core material 41 and constitutes the outer surface of the conductive terminal pin 40. The core material 41 can be made of a material having a lower rigidity than the outer material 42 but a higher thermal conductivity. The outer material 42 can be made of a material having a lower thermal conductivity than the core material 41 but a higher rigidity. In the case of the present embodiment, the conductive terminal pin 40 includes a core material 41 made of, for example, copper, which has high thermal conductivity, and an outer material 42 made of, for example, an iron-nickel alloy or ferritic stainless steel, which is more rigid than the core material 41.

The fixed contact 21, the movable contact 22, and the heat-sensitive movable plate 25 have a function of operating when the ambient temperature inside the airtight container 30 reaches a predetermined temperature or higher to open the two conductive terminal pins 40 and interrupt the electrical connection. The fixed contact 21 is made of a conductive metal material or a material such as cladding material of silver oxide alloy and copper or copper alloy, for example. The two fixed contacts 21 are provided inside the airtight container 30 and are electrically connected to the conductive terminal pins 40. Each fixed contact 21 is fixed to the end of the conductive terminal pins 40 inside the airtight container 30 by welding or the like, for example.

The two movable contacts 22 are provided inside the airtight container 30 and correspond to the respective two fixed contacts 21. Similarly to the fixed contact 21, the movable contact 22 is made of a conductive metal material or a material such as cladding material of silver oxide alloy and copper or copper alloy, for example. The two movable contacts 22 are provided on the heat-sensitive movable plate 25 and respectively face the fixed contacts 21. The movable contacts 22 are formed in the shape of a substantially hemispherical projection from the surface of the heat-sensitive movable plate 25 on the lid plate 32 side toward the lid plate 32 side. The movable contacts 22 are fixed to the heat-sensitive movable plate 25 by welding or the like, for example.

The support 23 is fixed to the inner surface of the housing 31 and has a function of supporting the elastic plate 24 and the heat-sensitive movable plate 25. The support 23 is formed, for example, by bending a rigid and long metal plate. Both longitudinal ends of the support 23 are formed by being bent so as to be parallel to the inner surface of the housing 31, and are fixed to the inner surface of the housing 31 by welding or the like. The longitudinal center of the support 23 is separated from the inner surface of the housing 31.

The elastic plate 24 has a function of elastically supporting the heat-sensitive movable plate 25. The elastic plate 24 is formed, for example, of an elastically deformable thin metal plate, and is entirely formed, for example, in a substantially elongated circular shape. The heat-sensitive movable plate 25 is elastically connected to the elastic plate 24 by welding or the like, directly or via another member. In this case, the elastic plate 24 is supported by the support 23 in the state of a double-supported beam with the longitudinal center of the motor protector 20 serving as a fulcrum.

The heat-sensitive movable plate 25 has a function of moving the movable contact 22 in a direction away from the fixed contact 21 when the ambient temperature in the airtight container 30 reaches a predetermined temperature or higher, that is, when the temperature of the heat-sensitive movable plate 25 itself reaches a predetermined temperature or higher. The heat-sensitive movable plate 25 is formed by, for example, drawing a conductive thin-plate-shaped bimetal or trimetal sheet into a shallow dish shape. The heat-sensitive movable plate 25 is formed as a whole in an elliptical shape long in the longitudinal direction of the motor protector 20. The two movable contacts 22 are respectively provided on the surface of the lid plate 32 side at both ends of the elliptical shape of the heat-sensitive movable plate 25 by welding or the like.

Under normal conditions when the heat-sensitive movable plate 25 is not in operation, the heat-sensitive movable plate 25 causes the respective movable contacts 22 in contact with the fixed contacts 21 and maintains the two fixed contacts 21 in a closed state. The heat-sensitive movable plate 25 also operates when the ambient temperature inside the airtight container 30 reaches a predetermined temperature, thereby deforming in a direction that separates the movable contacts 22 from the respective fixed contacts 21 to open the fixed contacts 21.

That is, under normal conditions when the heat-sensitive movable plate 25 is not in operation, the heat-sensitive movable plate 25 is curved toward the lid plate 32 at both longitudinal end sides, that is, the two movable contact 22 sides, with the longitudinal center serving as the apex. Therefore, the fixed contacts 21 are in contact with the movable contacts 22 that the respective fixed contacts face, causing conduction to occur between the two fixed contacts 21 through the movable contacts 22 and the heat-sensitive movable plate 25. That is, in this case, the two conductive terminal pins 40 are electrically connected via the fixed contacts 21, the movable contacts 22, and the heat-sensitive movable plate 25. The two conductive terminal pins 40 and the airtight container 30 are electrically connected via the fixed contacts 21, the movable contacts 22, the heat-sensitive movable plate 25, the elastic plate 24, and the support 23.

When the ambient temperature in the airtight container 30 rises to a predetermined temperature at which the heat-sensitive movable plate 25 operates, the heat-sensitive movable plate 25 operates and deforms in a direction that reverses the curvature of the heat-sensitive movable plate 25. Then, the movable contacts 22 are separated from the fixed contacts 21, thereby interrupting the electrical connection between the two fixed contacts 23, that is, between the two conductive terminal pins 40, and the electrical connection between the conductive terminal pins 40 and the airtight container 30.

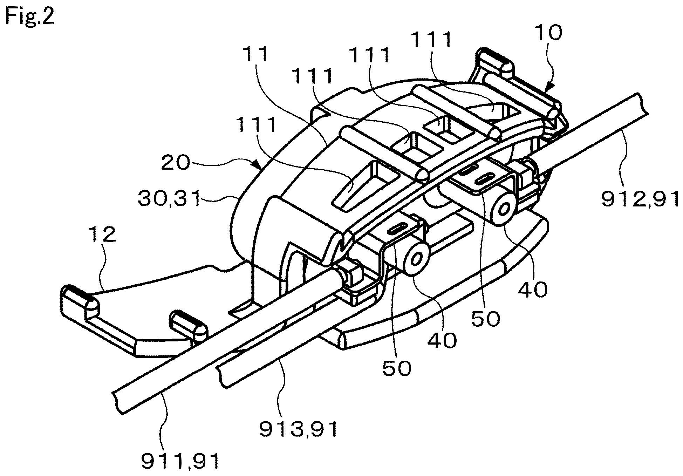

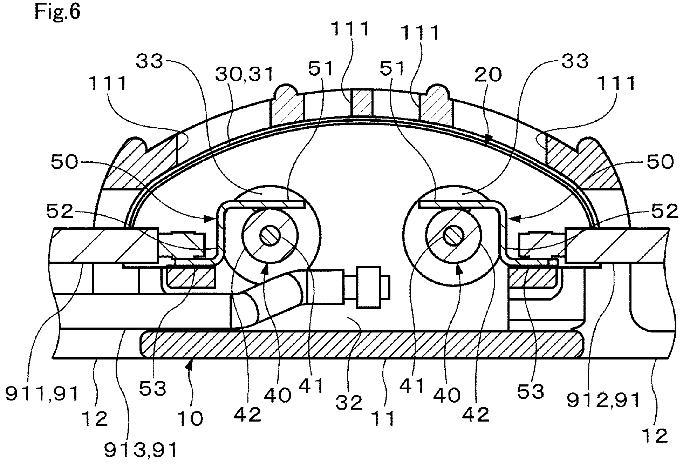

As shown in Figures 2 to 7, the motor protector 20 further includes a heat generating member 50. The heat generating member 50 is connected and fixed to the conductive terminal pin 40 outside the airtight container 30. A motor winding 91 is, for example, attached to the heat generating member 50 and electrically connected to the conductive terminal pin 40 via the heat generating member 50. In this case, the winding 91 connected to a connection portion 53 does not come into direct contact with the conductive terminal pin 40. Note that the motor winding 91 does not need to be directly connected to the heat generating member 50, and a lead wire member previously connected and fixed to the connection portion 53 may be provided between the winding 91 and the connection portion 53, for example.

The heat generating member 50 is made of a material different from the conductive terminal pin 40. The heat generating member 50 is located between the conductive terminal pin 40 and the motor winding 91 and has a function of generating heat when a current flows. The heat generating member 50 is formed by bending a conductive metal plate or the like, for example, and is provided on the conductive terminal pin 40 by welding or the like.

The heat generating member 50 includes, for example, an attachment portion 51, an intermediate portion 52, and the connection portion 53. The attachment portion 51 and the connection portion 53 are located at both ends of the heat generating member 50 and are arranged in parallel with each other. The attachment portion 51 is a portion attached to the conductive terminal pin 40 by welding or the like. The connection portion 53 is a portion to which the motor winding 91 is attached by welding or the like. The intermediate portion 52 is located at the central portion of the heat generating member 50 and connects the attachment portion 51 and the connection portion 53. The attachment portion 51 and the intermediate portion 52 are formed by bending at a right angle. The intermediate portion 52 and the connection portion 53 are also formed by bending at a right angle. In the heat generating member 50, the attachment portion 51, the intermediate portion 52, and the connection portion 53 are integrally formed by bending, for example, a metal plate. Note that the attachment portion 51 and the connection portion 53 may be connected by an intermediate portion 52 bent in a curved shape.

The heat generating member 50 is made of a conductive material and a material having an electrical resistivity higher than that of any of the conductive terminal pin 40, the fixed contact 21, the movable contact 22, the elastic plate 24, and the heat-sensitive movable plate 25. As the material of the heat generating member 50, an electrical resistance material or an electrical heating material, such as nickel chromium, copper nickel, copper manganese, or iron chromium, can be used. In this case, an electrical resistance value between the two heat generating members 50 is set within the range of four to eight times an electrical resistance value between the two conductive terminal pins 40. Therefore, when a current of the same current value flows between the two heat generating members 50 and between the two conductive terminal pins 40, the amount of heat generated between the heat generating members 50 is greater than that generated between the conductive terminal pins 40. Note that the electrical resistance value between the heat generating members 50 includes the electrical resistance value of the electrical path existing between the heat generating members 50, that is, the conductive terminal pins 40, the fixed contacts 21, the movable contacts 22, and the heat-sensitive movable plate 25.

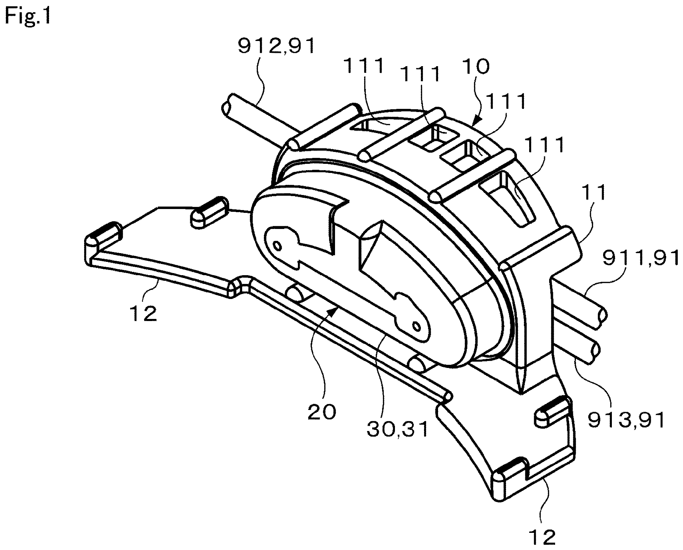

Next, the holder 10 will be described. The holder 10 is a holder for attaching the motor protector 20 to the electric compressor. The holder 10 is made of, for example, a resin material having electrical insulation. As shown in Figures 1 to 4, the holder 10 includes a cover portion 11 and a blade portion 12. In the case of the present embodiment, the cover portion 11 and the blade portion 12 are integrally configured. In the present specification, the phrase that the cover portion 11 and the blade portion 12 are integrally configured means that the cover portion 11 and the blade portion 12 are configured seamlessly by resin molding or the like without bonding, joining, or the like.

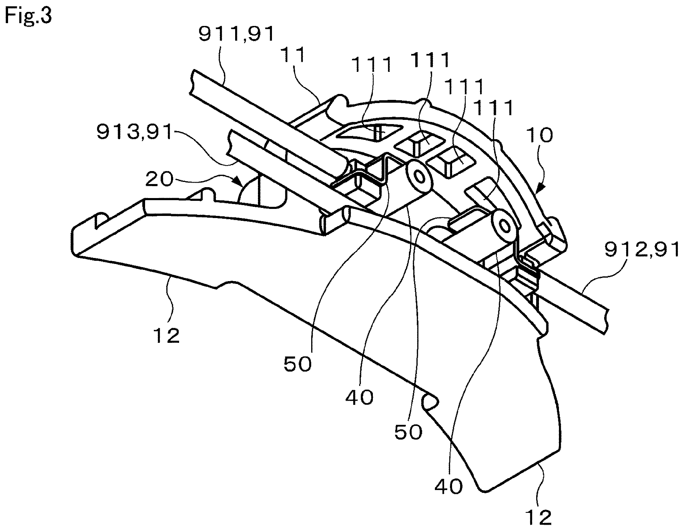

The cover portion 11 is formed in a cylindrical shape as a whole, is fitted with at least a part of the motor protector 20, and surrounds the heat generating member 50. The cover portion 11 includes a communication portion 111. The communication portion 111 is a hole that is formed through the cover portion 11 in the thickness direction and communicates the inside and outside of the cover portion 11. The communication portion 111 is provided in the portion of the cover portion 11 opposite to the blade portion 12. As shown in Figure 3, the communication portion 111 is not provided on the blade portion 12 side of the cover portion 11. That is, the portion of the cover portion 11 opposite to the blade portion 12 includes the communication portion 111 that does not cover the heat generating member 50, thereby partially covering the heat generating member 50. On the other hand, the portion of the cover portion 11 on the blade portion 12 side does not include the communication portion 111, thereby covering the entire heat generating member 50.

With respect to the cover portion 11, the blade portion 12 is formed in a flat plate shape extending in a direction perpendicular to the longitudinal direction, that is, the extending direction, of the conductive terminal pin 40. As shown in Figure 3 and other figures, the blade portion 12 is formed in the shape of a gentle arc as a whole. Each of the cover portion 11 and the blade portion 12 has a rear surface, that is, a surface opposite to the motor protector 20 side, formed as a flat surface without irregularities.

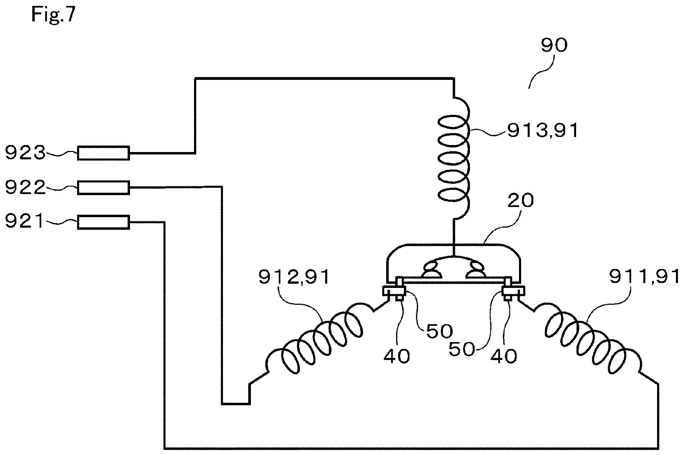

Next, an electric compressor 80, to which the motor protector 20 is attached, and a method for attaching the motor protector 20 to the electric compressor 80 will be described. The motor protector 20 is used by being connected to a neutral point of a three-phase motor 90 as shown in, for example, Figure 7. In this case, power supply-side ends of three-phase windings 911, 912, 913 of the three-phase motor 90 are connected to a three-phase power supply via power supply terminals 921, 922, 923, respectively. Looking at the neutral point-side ends of the respective windings 91, two windings 911, 912 of the three-phase windings 91 are connected to the heat generating member 50. The windings 911, 912 connected to the connection portion 53 of the heat generating member 50 are electrically connected to the fixed contact 21 via the conductive terminal pin 40. The remaining one winding 913 of the three-phase windings 91 is fixed to a metal portion outside the airtight container 30, such as the lid plate 32, by welding or the like. The winding 913 connected to the lid plate 32 is electrically connected to the movable contact 22 via the housing 31, the support 23, the elastic plate 24, and the heat-sensitive movable plate 25.

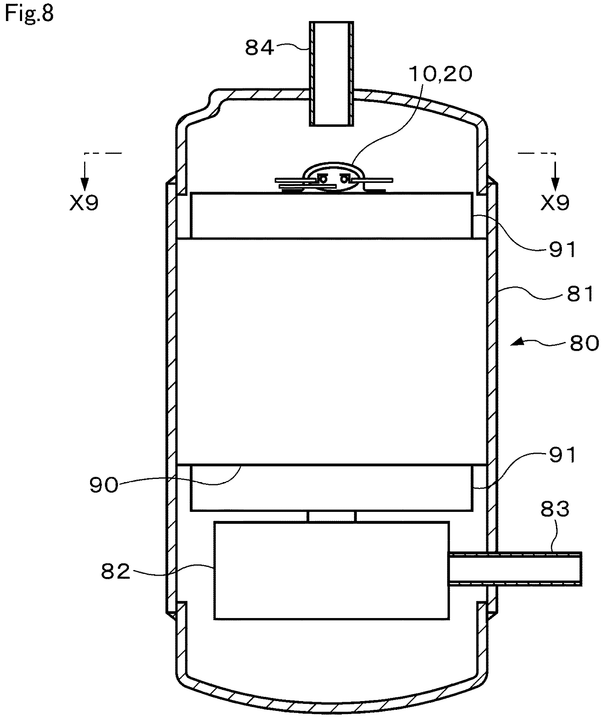

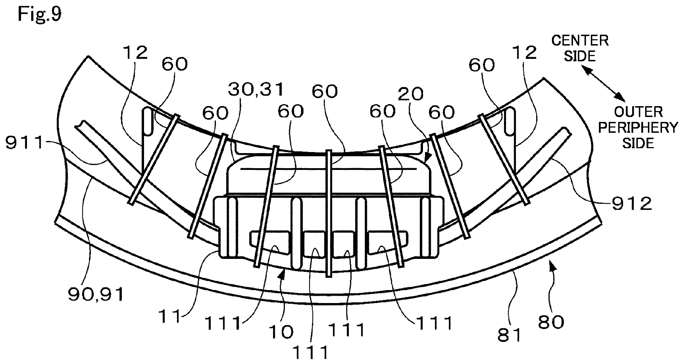

Figures 8 and 9 show an example of the case where the motor protector 20 having the above configuration is attached to the hermetic electric compressor 80 using the holder 10. In the following description, the hermetic electric compressor 80 may be simply referred to as the compressor 80. The compressor 80 is a totally or semi-hermetic electric compressor for refrigerant and can be used in an air conditioner or the like to constitute a part of a refrigeration cycle. The compressor 80 is not limited to a small- or medium-sized type with relatively low capacity, and may also be a large-capacity type.

The compressor 80 includes a compressor container 81, a compression mechanism 82, the motor 90, the motor protector 20, and the holder 10. The compressor container 81 is a container having airtightness and pressure resistance and constitutes the outer shell of the compressor 80. Both the compression mechanism 82 and the motor 90 are provided in the compressor container 81. That is, the compressor container 81 houses the compression mechanism 82 and the motor 90 including the winding 91. The compression mechanism 82 has a function of compressing and discharging refrigerant. The compression mechanism 82 can be a rotary vane type as well as a scroll type, for example.

The motor 90 includes the winding 91 and drives the compression mechanism 82. A suction pipe 83 and a discharge pipe 84 are hermetically connected to the compressor container 81. The suction pipe 83 guides the refrigerant from a heat exchanger (not shown) or the like to the compression mechanism 82 in the compressor container 81. The discharge pipe 84 discharges the refrigerant compressed by the compression mechanism 82 and sends the refrigerant to the heat exchanger (not shown). In the present specification, the refrigerant includes refrigerating machine oil that lubricates the compression mechanism 82, that is, lubricating oil.

As shown in Figure 9, the motor protector 20 is attached to the coil winding 91 of the motor 90 by binding with a binding thread 60 while being fitted and held in the holder 10. The binding thread 60 is made of, for example, a resin material having electrical insulation and flexibility. The holder 10 holding the motor protector 20 is attached to the winding 91 in the compressor container 81 in an orientation such that the heat generating member 50 is exposed to the flow of refrigerant generated during normal operation of the compressor 80, that is, when the compressor 80 is in normal operation.

During operation of the compressor 80, the compressor container 81 is filled with liquid refrigerant, creating a flow of refrigerant from the suction pipe 83 to the discharge pipe 84. Therefore, in the compressor container 81, the motor protector 20 is provided, for example, at a position downstream of the compression mechanism 82, that is, for example, between the motor 90 and the discharge pipe 84.

The motor protector 20 and the holder 10 are arranged along the outer peripheral edge portion of the winding 91, and attached thereto such that the blade portion 12 of the holder 10 is located on the winding 91 side, that is, the outer surface of the blade portion 12 is in contact with the winding 91. The motor protector 20 and the holder 10 are arranged with the heat generating member 50 facing the outer periphery of the compressor container 81. The compressor 80 is driven by an inverter-controlled power supply, and the current at the time of locking is set equal to or lower than the current during normal overload operation. That is, when the compressor 80 is driven by the inverter-controlled power supply, the compressor 80 can be equipped with the motor protector 20 and the holder 10 to set the current at the time of locking equal to or lower than the current during normal overload operation.

Here, the following state is referred to as a "phase loss": one or more phases of the three-phase power supply supplied to the motor are not energized due to disconnection of a power supply line, poor contact at a wire connection portion, failure of a power supply control circuit, disconnection inside the motor, or other causes. When the compressor is started, if the motor is energized in a phase loss state, the rotor of the motor enters a locked state in which the motor does not rotate due to insufficient torque, and the starting current continues to flow to the motor. Since the starting current is higher than the current during normal operation, if the starting current continues to flow to the motor in the phase loss state, the balance of the phases at the neutral point is disrupted, and an abnormal current flows. Generally, the starting current when the motor is started from such a phase loss state is referred to as a "phase-loss lock current."

When the rotor becomes locked due to a phase loss, the flow of refrigerant including refrigerant oil, that is, lubricating oil, slows down, and as a result, the motor cannot be cooled by the flow of refrigerant. If the phase-loss lock current continues to flow to the motor while the rotor is locked, the temperature of the motor rapidly rises due to Joule heating, and in the worst case, the motor may burn out. Therefore, it is important to detect the phase-loss lock current and interrupt the power supply to the motor.

However, if the maximum rated current of the motor is high due to circumstances such as the existence of a high-voltage and high-current operation mode, as in an inverter-controlled motor, the difference between the phase-loss lock current and the maximum rated current of the motor is small. In this case, if the operating temperature required for operating the heat-sensitive movable plate is set to match the heat generated by the phase-loss lock current, the heat-sensitive movable plate may operate within the maximum rated current range, causing excessive operation. In contrast, if the operating temperature required for operating the heat-sensitive movable plate is set high so as to prevent the heat-sensitive movable plate from operating even at the maximum rated current, it takes time for the temperature in the motor protector to rise due to the phase-loss lock current. As a result, when a phase loss lock occurs, the heat-sensitive movable plate cannot be heated to the operating temperature in a short period of time. It may thus take time for the motor protector to interrupt the phase-loss lock current, and during this time, the temperature of the motor may rise to a dangerous range.

Therefore, the motor protector 20 of the present embodiment includes the metal airtight container 30, the two conductive terminal pins 40, the two fixed contacts 21, the two movable contacts 22, the heat-sensitive movable plate 25, and the heat generating member 50. The airtight container 30 is formed to be airtight and includes the housing 31 having the opening and the space inside, and the lid plate 32 that is provided on the housing 31 and covers the opening. The conductive terminal pin 40 is provided in the lid plate 32 via the filler 33 having electrical insulation, and has one end inserted into the airtight container 30 and the other end exposed to the outside of the airtight container 30.

The fixed contacts 21 are provided inside the airtight container 30 and are electrically connected to the conductive terminal pins 40. The movable contacts 22 are provided inside the airtight container 30 and correspond to the two fixed contacts 21, respectively. The heat-sensitive movable plate 25 is provided inside the airtight container 30 and has the two movable contacts 22 attached thereto. Under normal conditions when the heat-sensitive movable plate 25 is not in operation, the heat-sensitive movable plate 25 causes the movable contacts 22 in contact with the respective fixed contacts 21 to close the two fixed contacts 21. When the ambient temperature inside the airtight container 30 reaches a predetermined temperature, the heat-sensitive movable plate 25 deforms in a direction that separates the movable contacts 22 from the respective fixed contacts 21 to open the respective fixed contacts 21. The heat generating member 50 is connected and fixed to the conductive terminal pin 40 outside the airtight container 30. The heat generating member 50 is made of a material different from the conductive terminal pin 40, is located between the conductive terminal pin 40 and the winding 91 of the motor 90, and generates heat when a current flows.

The method for attaching the motor protector 20 according to the present embodiment includes a step of attaching the motor protector 20 to the winding 91 of the motor 90 in an orientation such that the heat generating member 50 is exposed to the flow of refrigerant generated during normal operation of the electric compressor 80 in the compressor container 81 of the electric compressor 80.

With this configuration, the motor protector 20 can suppress the occurrence of excessive operation, in which operation is performed at or below the maximum rated current, and non-operation, in which no operation is performed even when there is an abnormality due to excessive current or lock current. That is, when the motor 90 is being operated at the maximum rated current, the compressor 80 does not stop because the operation is within the range of normal operation, and the refrigerant in the compressor container 81 also continues to flow. In this case, the maximum rated current flows through the heat generating member 50, thereby generating Joule heat in the heat generating member 50. However, since the heat generating member 50 is exposed to the flow of the refrigerant, most of the Joule heat generated in the heat generating member 50 is dissipated into the refrigerant. Thus, even if the maximum rated current flows through the motor 90, the transmission of the Joule heat, generated in the heat generating member 50, to the airtight container 30 is suppressed, thereby preventing the temperature in the airtight container 30 from reaching the operating temperature of the heat-sensitive movable plate 25. Therefore, in this case, the motor protector 20 does not operate and power supply to the motor 90 continues.

In contrast, if an abnormality such as a phase loss lock occurs in the motor 90 and the compression mechanism 82 stops operating, the flow of the refrigerant in the compressor container 81 is weakened or the refrigerant stops flowing. On the other hand, the phase-loss lock current flows through the heat generating member 50, thereby generating Joule heat in the heat generating member 50. In this case, since the flow of the refrigerant is weakened, heat dissipation into the refrigerant also decreases. Therefore, most of the Joule heat generated in the heat generating member 50 is transmitted into the airtight container 30 via the conductive terminal pin 40, and as a result, the temperature in the airtight container 30 rises. When the temperature in the airtight container 30 reaches the operating temperature of the heat-sensitive movable plate 25, the heat-sensitive movable plate 25 operates, that is, the motor protector 20 operates, and the power supply to the motor 90 is interrupted.

Thus, according to the motor protector 20 of the present embodiment, even if the maximum rated current of the motor 90 is close to the phase-loss lock current, when the motor 90 is operating at or below the maximum rated current, the operation of the motor protector 20 can be prevented. On the other hand, when the motor 90 is locked and the phase-loss lock current flows, the motor protector 20 can be caused to operate in a short period of time. As a result, it is possible to reliably suppress the occurrence of excessive operation, in which operation is performed at or below the maximum rated current, and non-operation, in which no operation is performed even when there is an abnormality due to excessive current or lock current. Such a motor protector 20 is more suitable for an electric compressor that is driven by an inverter-controlled power supply and in which the current at the time of locking is set equal to or lower than the current during normal overload operation.

Here, if the electrical resistance value between the heat generating members 50 is too large relative to the electrical resistance value between the two conductive terminal pins 40, the amount of heat generated in the heat generating member 50 is too large, and the Joule heat generated in the heat generating members 50 is not sufficiently dissipated by the refrigerant and transmitted into the airtight container 30. As a result, the temperature in the airtight container 30 rises to the operating temperature of the heat-sensitive movable plate 25, resulting in excessive operation in which operation is performed at or below the maximum rated current. Furthermore, if the electrical resistance value between the heat generating members 50 is unnecessarily too large, the power consumption of the motor 90 also increases unnecessarily. In contrast, if the electrical resistance value between the heat generating members 50 is too small relative to the electrical resistance value between the two conductive terminal pins 40, the amount of heat generated in the heat generating members 50 is too small to raise the temperature in the airtight container 30 to the operating temperature of the heat-sensitive movable plate 25 in a short period of time. This results in non-operation in which the motor protector 20 does not operate even in the event of an abnormality due to excessive current or lock current.

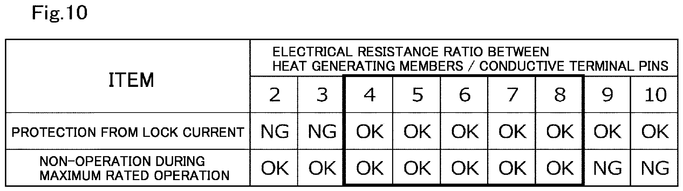

With respect to the above problems, the inventor of the present invention experimented with the operation of the motor protector 20 by changing, stepwise, the ratio of the electrical resistance between the two heat generating members 50 to the electrical resistance between the two conductive terminal pins 40 excluding the heat generating members 50, and obtained the results shown in Figure 10. Note that the item "Protection from lock current" in Figure 10 refers to an examination of whether the motor protector 20 properly operates when a lock current occurs. The item "Non-operation during maximum rated operation" refers to an examination of whether the motor protector 20 does not operate when the motor is operated at the maximum rated current. Further, **"OK"** in Figure 10 means that the requirement indicated in the item is satisfied, and **"NG"** means that the requirement indicated in the item is not satisfied.

According to the result of Figure 10, it was found that when the electrical resistance value between the two heat generating members 50 is less than four times the electrical resistance value between the two conductive terminal pins 40, the amount of heat generated between the heat generating members 50 is too small, which tends to cause non-operation of the motor protector 20, and the motor cannot be protected properly from the lock current. On the other hand, it was found that when the electrical resistance value between the two heat generating members 50 is greater than eight times the electrical resistance value between the two conductive terminal pins 40, the amount of heat generated in the heat generating members 50 is too large, which tends to cause excessive operation.

Therefore, in the present embodiment, the electrical resistance value between the two heat generating members 50 is set within the range of four to eight times the electrical resistance value between the two conductive terminal pins 40. This makes it possible to more reliably suppress both excessive operation, in which operation is performed at or below the maximum rated current, and non-operation, in which no operation is performed even when there is an abnormality due to excessive current or lock current.

The conductive terminal pin 40 of the present embodiment includes the core material 41 made of copper. With this configuration, by using copper having a high thermal conductivity as the core material 41, the Joule heat generated in the heat generating member 50 can be transmitted more efficiently into the airtight container 30 via the conductive terminal pins 40. Thus, in the event of an abnormality due to excessive current or lock current, the temperature in the airtight container 30 can be quickly raised to the operating temperature of the heat-sensitive movable plate 25, and as a result, the motor protector 20 can be caused to operate more quickly when an abnormality occurs in the motor 90.

The holder 10 of the present embodiment is a holder for attaching the motor protector 20 to the electric compressor 80. The holder 10 includes the cover portion 11 and the blade portion 12. The cover portion 11 is fitted with at least a part of the motor protector 20 and surrounds the heat generating member 50. The blade portion 12 is formed in a plate shape extending in a direction perpendicular to the longitudinal direction of the conductive terminal pin 40.

With this configuration, the heat generating member 50 is surrounded by the cover portion 11, so that the influence of heat received from the motor 90 can be reduced. The motor protector 20 is attached such that the blade portion 12 is located between the motor 90 and the motor protector 20, whereby the influence of heat received from the motor 90 can be further reduced. Thus, the influence of heat generated in the motor 90 when the motor 90 is operated at or below the maximum rated current can be reduced, and as a result, excessive operation in which the motor protector 20 operates at or below the maximum rated current can be more reliably suppressed.

In this case, the cover portion 11 includes communication portion 111. The communication portion 111 is formed through the cover portion 11 and communicates with the inside and outside of the cover portion 11. With this configuration, the refrigerant that enters the inside of the cover portion 11 and cools the heat generating member 50 escapes from the communication portion 111 to the outside of the cover portion 11. Therefore, it is possible to prevent the refrigerant entering the inside of the cover portion 11 from remaining inside the cover portion 11, thereby efficiently cooling the heat generating member 50 when the motor 90 is operating normally. As a result, excessive operation in which the motor protector 20 operates at or below the maximum rated current can be more reliably suppressed.

Here, when the compressor 80 is operating normally, the flow of the refrigerant in the compressor container 81 is faster on the outer periphery side than on the center side of the compressor 80. Therefore, in the present embodiment, the motor protector 20 is disposed with the heat generating member 50 facing the outer periphery, that **is,** the inner wall, of the compressor container 81. With this configuration, when the compressor 80 is operating normally, the heat generating member 50 is exposed to the faster flowing refrigerant, thereby enabling the Joule heat generated in the heat generating member 50 to be more effectively dissipated into the refrigerant. As a result, excessive operation in which the motor protector 20 operates at or below the maximum rated current can be more reliably suppressed.

One embodiment described above is presented as an example and is not intended to limit the scope of the invention. This novel embodiment can be implemented in various other forms, and various omissions, substitutions, and changes can be made without departing from the gist of the invention. The present embodiment and variations thereof are included in the scope and gist of the invention, and are also included in the invention recited in the claims and the equivalents thereof.

## Claims

1. A motor protector comprising:
an airtight container that is made of metal and formed to be airtight, and includes a housing having an opening and a space inside, and a lid plate provided on the housing and covering the opening;
two conductive terminal pins each provided in the lid plate via a filler having electrical insulation, the conductive terminal pins each having one end inserted into the airtight container and the other end exposed to an outside of the airtight container;
two fixed contacts provided inside the airtight container and electrically connected to the conductive terminal pins;
two movable contacts provided inside the airtight container and corresponding to the two fixed contacts, respectively;
a heat-sensitive movable plate that is provided inside the airtight container and to which the two movable contacts are attached, the heat-sensitive movable plate causing the movable contacts in contact with the respective fixed contacts to close the two fixed contacts under a normal condition when the heat-sensitive movable plate is not in operation, and deforming in a direction that separates the movable contacts from the respective fixed contacts to open the respective fixed contacts when an ambient temperature inside the airtight container reaches a predetermined temperature and the heat-sensitive movable plate operates; and
a heat generating member that is connected and fixed to the conductive terminal pins outside the airtight container, is made of a material different from a material of the conductive terminal pins, is located between each of the conductive terminal pins and a winding of a motor, and generates heat when a current flows.

2. The motor protector according to claim 1,
wherein an electrical resistance value between heat generating members is set within a range of four to eight times an electrical resistance value between the two conductive terminal pins, the heat generating members each being the heat generating member.

3. The motor protector according to claim 1 or 2,
wherein each of the conductive terminal pins includes a core material made of copper.

4. A holder for attaching the motor protector according to claim 1 to an electric compressor, the holder comprising:
a cover portion into which at least a part of the motor protector is fitted and that surrounds the heat generating member; and
a blade portion formed in a plate shape extending in a direction perpendicular to a longitudinal direction of the conductive terminal pins.

5. The holder for the motor protector, according to claim 4,
wherein the cover portion includes a communication portion that is formed through the cover portion and communicates an inside and an outside of the cover portion.

6. A method for attaching the motor protector according to claim 1 to an electric compressor, the method comprising:
a step of attaching the motor protector to the winding of the motor in an orientation such that the heat generating member is exposed to a flow of refrigerant generated during normal operation of the electric compressor in a compressor container of the electric compressor.

7. The method for attaching the motor protector, according to claim 6,
wherein the motor protector is disposed with the heat generating member facing an outer periphery of the compressor container.

8. An electric compressor comprising:
a compressor container that houses a motor including a compression mechanism and a winding; and
a motor protector that is connected to the winding on a neutral point side of the motor, and is attached to the winding by using the method according to claim 6 or 7 for attaching the motor protector,
wherein the electric compressor is driven by an inverter-controlled power supply, and a current at a time of locking is equal to or lower than a current during normal overload operation.
